# EUROPÄISCHE PATENTSCHRIFT

(11) **EP 2 400 862 B1**
(45) Veröffentlichungstag und Bekanntmachung des Hinweises auf die Patenterteilung: **12.12.2012**
(21) Anmeldenummer: 10702232.9
(22) Anmeldetag: 01.02.2010
(51) Int. Cl.: A23L 3/01, A23L 3/10

(54) **VERFAHREN ZUM HALTBARMACHEN VON LEBENSMITTELN**
METHOD FOR PRESERVING FOOD
PROCÉDÉ DE CONSERVATION DE PRODUITS ALIMENTAIRES

(30) Priorität: 26.02.2009 CH 2872009
(43) Veröffentlichungstag der Anmeldung: 04.01.2012
(73) Patentinhaber: MicroPast GmbH, 6340 Baar (CH)
(72) Erfinder: KELLER, Karl, CH-8197 Rafz (CH)
(74) Vertreter: Rentsch Partner AG
(86) Internationale Anmeldenummer: PCT/CH2010/000023
(87) Internationale Veröffentlichungsnummer: WO 2010/096939

(56) Entgegenhaltungen:
- EP-A1- 1 076 012
- EP-A1- 1 357 054
- EP-A1- 1 422 163
- WO-A1-2006/034737
- WO-A1-2007/039676
- US-B1- 6 686 302

## Beschreibung

### TECHNISCHES GEBIET

Die vorliegende Erfindung betrifft ein Verfahren zum Haltbarmachen von Lebensmitteln, bei welchem die Lebensmittel im feuchten Zustand in einem als Transport- und Verkaufsverpackung geeigneten Behälter mit Entlüftungsöffnung während einer begrenzten Zeit, zumindest jedoch solange mit Mikrowellen erhitzt werden, bis sich heisser Dampf in dem Behälter bildet und durch die Entlüftungsöffnung austritt, bei welchem nach dem Erhitzens ein Gas mit einer Kanüle in den Behälter injiziert und dazu mit der Kanüle eine Behälterwand aus einer Kunststofffolie durchstochen wird und bei welchem nach der Gasinjektion die Entlüftungsöffnung und das durch die Kanüle in der Kunststofffolie verursachte Einstichloch verschlossen werden.

### STAND DER TECHNIK

Ein Verfahren der vorgenannten Art ist aus WO 2006/084402 A1 bekannt. Die Injektion des Gases dient bei diesem Verfahren insbesondere dazu, die Ausbildung eines erheblichen Unterdrucks in dem Behälter nach seinem Verschliessen durch kondensierenden Dampf zu vermeiden.

Hinsichtlich der Ausbildung der Behälter wird in WO 2006/084402 A1 auf EP 1 076 012 A1 verwiesen. Die aus EP 1 076 012 A1 bekannten Behälter weisen eine tiefgezogene flache Schalen aus Polypropylen mit einem umlaufenden Rand auf. Auf diesen Rand ist mit einer umlaufenden Schweissnaht eine Abdeckfolie aufgeschweisst, für welche 12 µm Polyester gegen ca. 90 - 100 µm Polypropylen kaschiert ist. Es ist diese mehrlagige Kunststofffolie, die mit der Kanüle zur Injektion des Gases durchstochen wird.

Aus WO 2006/084402 A1 ist weiter bekannt, als Gas ein sauerstoffarmes oder -freies Gas zu verwenden und den Behälter damit zu spülen, um den Gehalt an Sauerstoff in dem Behälter, der für die Haltbarkeit der Lebensmittel besonders schädlich ist, zu reduzieren.

Auch ist es aus WO 2006/084402 A1 bekannt, das mit der Kanüle bei der Injektion erzeugte Einstichloch und gleichzeitig die Entlüftungsöffnung durch Aufbringen eines Aufklebers abzudichten.

### DARSTELLUNG DER ERFINDUNG -

Die vorliegende Erfindung bezweckt eine Verbesserung des bekannten Verfahrens. Es hat sich nämlich herausgestellt, dass die vorerwähnte Kunststofffolie nicht ausreichend stabil ist, sich unter der hohen Wärme- und Druckbelastung während des Erhitzens zu sehr aufwölbt und nach dem Ende des Erhitzens dazu neigt, durch Verschrumpeln wellig zu werden.

Anders als bei EP 1 076 012 A1, wo der Behälter nach dem Erhitzen zur Entnahme der Lebensmittel zum Verzehr geöffnet wird und die Abdeckfolie nicht weiter von Bedeutung ist, bleibt die Kunststofffolie bei dem erfindungsgemässen Verfahren für längere Zeit auf dem Behälter und bestimmt nicht unwesentlich dessen Aussehen und Erscheinungsbild in der Verkaufsphase.

Das Verhalten der bekannten Abdeckfolie ist zudem für das Einstechen der Kanüle sowie den Injektionsvorgang nicht günstig. Schliesslich erschwert ihre Welligkeit das Aufsetzen des Aufklebers.

Gemäss der vorliegenden Erfindung, wie sie im Patentanspruch 1 gekennzeichnet ist, wird als Kunststofffolie eine solche mit einer Dicke kleiner 100 µm verwendet, wobei wenigstens eine Lage der Kunststofffolie aus Polyethylenterephthalat (PET) mit einer Dicke grösser 19 µm besteht.

Diese Folie ist, obwohl insgesamt sogar dünner als die aus EP 1 076 012 A1 bekannte, wegen ihrer dickeren Lage aus PET unter den auftretenden Temperatur- und Druckbelastungen wesentlich weniger dehnbar und kehrt praktisch vollständig in ihre ursprünglich glatte Form wieder zurück. Die vorgenannten Probleme werden dadurch vermieden.

Bei der verwendeten Kunststofffolie ist die Lage aus PET insbesondere durch entsprechendes Recken biaxial orientiert. Bevorzugt weist die Lage aus PET eine Dicke von 23 µm auf. Die Dicke könnte jedoch bis 40 µm betragen.

Bevorzugt wird weiter als Kunststofffolie eine mehrlagige Kunststofffolie verwendet, bei der eine zweite Lage aus Polypropylen besteht, und wobei die Lage aus Polypropylen vorzugsweise nur 2 bis 2.5 -fach dicker als die Lage aus PET ist.

Zur Verbesserung der Dichtheit kann ausserdem zwischen den beiden Lagen eine Barriereschicht vorgesehen sein, wobei für die Barriereschicht zur Erzielung eines OTR-Wertes um 1 insbesondere Siliziumoxid, Aluminiumoxid und/oder Ethylenvinylalkohol verwendet wird.

Entsprechend der bevorzugten Ausführungsform der WO 2006/084402 A1 wird auch im Rahmen der vorliegenden Erfindung bevorzugt als Behälter ein schalenförmiger Behälter aus Kunststoff verwendet, auf welchen die Kunststofffolie als Abdeckfolie eben aufgeschweisst wird. Für einen Inhalt von um die 300 g kann der schalenförmige Behälter rund sein, einen Durchmesser von 15 -17 cm und eine Höhe von 2.5 - 3.5 cm aufweisen. Es können auch ovale, rechteckige oder quadratische Schalen verwendet werden.

Dabei kann als Abdeckfolie eine mehrlagige Kunststofffolie verwendet werden, bei der eine zweite Lage aus einer Verbindungslage besteht, welche eine Verbindung zwischen der Kunststofffolie und der Schale erlaubt. Als Verbindungslage kann z.B. die bereits erwähnte Lage aus Polypropylen verwendet werden, welche sich gut mit einer Schale aus Polypropylen verschweissen lässt.

Vor dem Verzehr der anhand dem beschriebenen Verfahren haltbargemachten Lebensmittel werden sie in der Verpackung typischerweise in einem Mikrowellenofen auf Verzehrtemperatur erhitzt. An manchen Orten, z.B. in Flugzeugen, ist der Einsatz von Mikrowellenöfen nicht möglich oder unerwünscht. Um ein Erhitzen der haltbargemachten Lebensmittel in der Verpackung in einem konventionellen Ofen bei höheren Temperaturen zu ermöglichen, kann für die Schale und die wenigstens eine Lage der Kunststofffolie aus Polyethylenterephthalat ein kristallines Polyethylenterephthalat (C-PET) mit einem höheren Schmelzpunkt als z.B. amorphes Polyethylenterephthalat verwendet werden. Als Verbindungslage kann ein Haftvermittler verwendet werden, welcher eine Verbindung zwischen der Kunststofffolie und der Schale erlaubt. Ein solcher Behälter ist demnach hitzebeständiger und die darin enthaltenen haltbargemachten Lebensmittel lassen sich in einem konventionellen Backofen bei Temperaturen um die 230 °C erhitzen.

In verfahrenstechnischer Hinsicht hat sich herausgestellt, dass es ausreicht, das Gas unter einem Überdruck von 0.05 - 0.8 bar, vorzugsweise von 0.2 - 0.4 bar, weiter vorzugsweise von 0.3 bar, zu injizieren. Dadurch wird gleichzeitig vermieden, dass die Kunststofffolie, ausgehend von dem durch die Kanüle erzeugten Einstichloch als besondere Schwachstelle, ausreisst.

Zur Injektion des Gases wird vorzugsweise eine Kanüle mit einem gegenüber ihrer Spitze etwas zurückversetzten Anschlagkragen verwendet. Die Kanüle wird dabei so geführt, dass der Anschlagkragen beim Injizieren des Gases wenigstens zeitweise an der Aussenseite der Kunststofffolie anliegt.

Bei kraftgesteuertem Antrieb der Kanüle kann mit dem Anschlagkragen ein zu tiefes Eindringen der Kanüle in den Behälter verhindert werden. Die Kanüle sollte denn auch möglichst nicht mit den Lebensmitteln in Berührung kommen, damit sie sofort für eine weitere Injektion von Gas in einen weiteren Behälter verwendet werden kann, ohne aufwendig gereinigt werden zu müssen. Ausserdem wird dadurch die Gefahr verringert, dass in einem Behälter allfällig vorhandene Keime in nachfolgend begaste Behälter verschleppt werden.

Wenn sich die Kunststofffolie durch die Injektion des Gases unter dem erwähnten Überdruck erneut dehnt und aufbläht, drückt sie gegen den Anschlagkragen, was einen zusätzlichen Schutz gegen ein Ausreissen des Einstichloch sowie eine gewisse Abdichtung um die Kanülenspitze herum bewirkt. Es kann hierbei von Vorteil sein, die Kanüle nach dem Einstechen wieder etwas zurückzuziehen, um die Ausdehnung der Kunststofffolie an der Einstichstelle nicht lokal zu blockieren.

Wie bereits aus WO 2006/084402 A1 bekannt, wird auch im Rahmen der vorliegenden Erfindung als Gas bevorzugt ein sauerstoffarmes oder -freies Gas zu verwendet und der Behälter mit diesem Gas unter Austreiben von Sauerstoff durch die Entlüftungsöffnung gespült. Vorzugsweise wird dies ausgeführt, bis der Sauerstoffgehalt im Behälter kleiner als 0.2 %, vorzugsweise 0.1 %, ist.

Danach werden, wie dies ebenfalls bereits in WO 2006/084402 A1 vorgesehen ist, die Entlüftungsöffnung und das Einstichloch durch Aufbringen eines Aufklebers auf die Kunststofffolie abgedichtet. Damit dies möglich ist, dürfen die beiden Öffnungen natürlich nicht allzu weit voneinander entfernt sein.

Das Verschliessen der Entlüftungsöffnung und des Einstichlochs sollte nach dem Ende der Injektion nicht vor Ablauf einer Wartezeit von wenigstens 3 Sekunden ausgeführt werden. Während dieser Wartezeit kann sich die durch die Gasinjektion aufgeblähte Kunststofffolie zumindest teilweise wieder entspannen und ihre vorzugsweise ebene Form annehmen, was das Aufbringen des Aufklebers erleichtert. Ausserdem wird die Haftung des Aufklebers durch die nach der Wartezeit weiter fortgeschrittene Abkühlung der Kunststofffolie verbessert. Die Wartezeit sollte andererseits aber auch nicht grösser als 10 sec sein.

Während der Wartezeit erhöht sich in dem Behälter, zumindest wenn sich dieser dabei z. B. in Umgebungsluft befindet, der zuvor durch das Spülen mit dem sauerstoffarmen oder -freien Gas reduzierte Gehalt an Sauerstoff wieder etwas. Obwohl die Anwesenheit von Sauerstoff der Haltbarkeit der Lebensmittel abträglich ist, ist ein Sauerstoffgehalt von 4 - 5% durchaus günstig und teilweise sogar vorgeschrieben, um die Bildung von Botulinumtoxin in dem Behälter zu verhindern, die anaerobe Bedingungen benötigt.

Um eine ausreichend lange Haltbarkeit der Lebensmittel sicherzustellen, sollte das Erhitzen so durchgeführt werden, dass eine Temperatur von 90 - 98 °C in der Kernzone der Lebensmittel während 30 - 90 sec erzeugt wird.

Als Kriterium dafür, ob diese Werte erreicht wurden, kann der durch den aus dem Behälter austretenden Dampf verursachte Gewichtsverlust bestimmt und mit einem vorgegebenen Grenzwert auf Überschreitung verglichen werden.

Wie bereits in WO 2006/084402 A1 betont, ist es wichtig, dass die Entlüftungsöffnung eine definierte Grösse und damit einen definierten Strömungswiderstand aufweist, der sich unter den Belastungen während des Erhitzens auch nicht verändert. In dieser Hinsicht hat sich herausgestellt, dass durch Heissnadelperforation oder Flammperforation, insbesondere jedoch durch Laserperforation in der Kunststofffolie geeignete Löcher mit einem Durchmesser von typisch 0.5 - 10 mm angebracht werden können, die diese Anforderungen gut erfüllen. Rund um das entstehende Loch ergibt sich bei diesen Verfahren ein Schmelzwulst als Randverstärkung. Die berührungslose Laserperforation erfolgt z.B. durch die Verwendung eines hochenergetischen Lichtes, das durch einen CO2 Gaslaser erzeugt wird, wobei im Linsenfokus des Laserlichtes das Material der Kunststofffolie plastifiziert und teilweise verdampft wird.

Bei geometrisch schwierigen Verpackungen, wie z.B. einer Becherverpackung mit einer Höhe von 80 bis 140 mm und einem geringen Durchmesser von 60 bis 200 mm kann auf Grund der Verpackungsgeometrie der beim Erhitzen entstandene Dampf durch das injizierte Gas gegebenenfalls nicht genügend verdrängt werden. Bei der Gasinjektion in den oberen Bereich einer Becherverpackung kann trotz des Spülens durch das injizierte Gas Dampf im unteren Drittel der Verpackung verbleiben und es kann während der Abkühlphase zum Einzug der Verpackung kommen.

Um dennoch eine genügende Spülung zu gewährleisten kann als Spülgas Argon verwendet werden. Die gegenüber Stickstoff höhere Dichte von Argon führt zu einer verbesserten Spülung auch im unteren Drittel einer Becherverpackung und somit zu einem geringeren Einzug der Verpackung in der Abkühlphase. Es hat sich jedoch gezeigt, dass sich beim Spülen mit Argon ein Restsauerstoff von 4-7% im Behälter ergibt, im Gegensatz zu etwa 0.1 % beim Spülen mit Stickstoff. Dies hat jedoch den Vorteil, dass die bereits erwähnte Bildung von Botulinumtoxin verhindert wird.

Eine weitere Möglichkeit, um bei geometrisch ungünstigen Verpackungen einen zu starken Einzug nach dem Erhitzen zu verhindern, besteht in der Durchführung einer zweiten Gasinjektion und einem Kühlschritt zwischen erster und zweiter Gasinjektion. Die erste Gasinjektion wird wie bereits beschrieben durchgeführt. Nach der ersten Gasinjektion werden die Entlüftungsöffnung und das Einstichloch durch Aufbringen eines Aufklebers abgedichtet. Der Aufkleber ist mit einem Kleber versehen, welcher die beiden Öffnungen fest verschliesst und sich auch unter Druck und Temperatur nicht mehr öffnet, damit sich bei der zweiten Gasinjektion auf Grund des leichten Überdrucks und der allfälligen Restwärme der Kleber nicht löst und dabei kein weiteres Gas entweichen kann. Die beiden Öffnungen bleiben fest verschlossen. Anschliessend wird die Verpackung in einem ersten Kühlschritt abgekühlt. Hierbei zieht sie sich etwas zusammen. Nach dem ersten Abkühlen wird ein zweites Mal Gas injiziert, wobei die Packung diesmal nicht gespült, sondern lediglich etwa bis zur ursprünglichen Form aufgebläht wird.

Das Einstichloch der zweiten Gasinjektion wird mit einem Aufkleber abgedichtet, welcher während der Lagerzeit einen hermetischen Verschluss gewährleistet, jedoch bei der Wiedererwärmung des Produktes beim Konsumenten sich unter Wärme, Dampf und/oder Druck selbsttätig öffnet.

Bei den oben genannten Verfahren, kann während der ersten Gasinjektion der Behälter zusätzlich von aussen aktiv gekühlt werden. Diese Kühlung kann z.B. durch ein Wasserbad oder einen Kühitunnel erreicht werden. Eine solche Kühlung bewirkt eine zusätzlich Abkühlung der in der Verpackung vorhandenen Lebensmittel, insbesondere, falls sich am Boden der Verpackung Flüssigkeit angesammelt hat, und unterstützt so die Abkühlung durch die erste Gasinjektion. Auch führt eine solche Kühlung zu einer Abkühlung der Seitenwände der Verpackung und somit zu einer erhöhten Kondensation des Dampfes an den Seitenwänden.

### KURZE ERLÄUTERUNG DER FIGUREN

Die Erfindung soll nachfolgend anhand eines Ausführungsbeispiels im Zusammenhang mit der Zeichnung näher erläutert werden. Es zeigen:
- Fig. 1: einen zur Verwendung im Rahmen des erfindungsgemässen Verfahrens geeigneten Behälter mit Entlüftungsöffnung und mit Lebensmitteln vor ihrer Haltbarmachung;
- Fig. 2: den Behälter von Fig. 1 während eines Erhitzens mittels Mikrowellen;
- Fig. 3: den Behälter mit einer in seiner Abdeckfolie eingestochenen Kanüle;
- Fig. 4: die Injektion eines Gases mit der Kanüle in den Behälter;
- Fig. 5: das Verschliessen der Entlüftungsöffnung und des durch die Kanüle verursachten Einstichloches mittels eines Aufklebers;
- Fig. 6: den verschlossenen Behälter mit den gemäss der Erfindung haltbar gemachten Lebensmitteln; und
- Fig. 7a: eine geeignete Becherverpackung zur Verwendung im Rahmen des erfindungsgemässen Verfahrens mit zwei Injektionsschritten;
- Fig. 7b: die Becherverpackung von Fig. 7a während eines Erhitzens mittels Mikrowellen;
- Fig. 7c: die Becherverpackung während einer ersten Injektion eines Gases mit einer eingestochenen Kanüle;
- Fig. 7d: das Verschliessen der Entlüftungsöffnung und des durch die erste Kanüle verursachten Einstichloches mittels eines permanenten Aufklebers;
- Fig. 7e: die während eines Kühlschrittes eingezogene Becherverpackung;
- Fig. 7f: die Becherverpackung während einer zweiten Injektion eines Gases mit einer eingestochenen Kanüle;
- Fig. 7g: die mit einem zweiten Aufkleber verschlossene Becherverpackung mit den gemäss der Erfindung haltbar gemachten Lebensmitteln.

### WEGE ZUR AUSFÜHRUNG DER ERFINDUNG

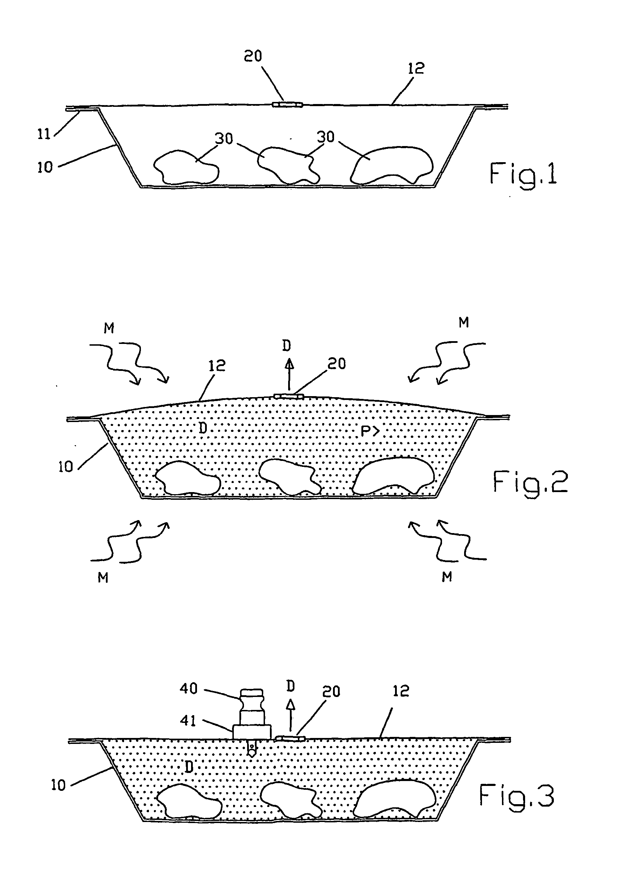

Fig. 1 zeigt einen schalenförmigen Behälter 10 aus Polypropylen mit einem umlaufenden Rand 11, auf welchem, ebenfalls umlaufend, eine Abdeckfolie 12 aufgeschweisst ist. Die Schweissverbindung ist vorzugsweise peelbar.

Bei der Abdeckfolie handelt es sich um eine mehrlagige Kunststofffolie mit einer Dicke kleiner 100 µm, wobei eine Lage aus biaxial orientiertem Polyethylenterephthalat (PET) und eine zweite Lage aus Polypropylen besteht, und wobei die Lage aus Polypropylen 50 µm und die Lage aus PET 23 µm dick ist. Zwischen den beiden Lagen kann noch eine Hochbarriere vorhanden, welche aus Siliziumoxid, Aluminiumoxid oder Ethylenvinylalkohol besteht.

In der Abdeckfolie 12 ist eine Entlüftungsöffnung 20 mit einem Durchmesser von ca. 2.5 mm vorgesehen, welche durch Laserperforation erzeugt wurde und dadurch einen kleinen Schmelzrand aufweist.

In dem Behälter 10 sind in Luft Lebensmittel 30 vorhanden, welche über eine gewisse Eigenfeuchte verfügen und z.B. noch in roh-frischem Zustand sind.

Fig. 2 zeigt den Behälter 10 während eines Erhitzens mit Mikrowellen M zum Haltbarmachen der Lebensmittel 30, wobei sich aus der in den Lebensmitteln 30 enthaltenen Feuchtigkeit Dampf D gebildet und einen Überdruck P> in dem Behälter 10 verursacht hat. Unter der Wirkung dieses Überdrucks P> strömt Dampf D zusammen mit der ursprünglich vorhandenen Luft aus dem Behälter 10 durch die Entlüftungsöffnung 20 aus. Unter der Wirkung des Überdrucks P> hat sich zudem die Abdeckfolie 12 gedehnt und aufgewölbt.

Nach dem Erhitzen und mit einsetzender Abkühlung lässt der Druck in dem Behälter 10 vor allem durch kondensierenden Dampf D schnell nach, so dass auch die Abdeckfolie 12 in ihre ursprünglich flache Form zumindest annähernd wieder zurückkehren kann. In dieser Phase wird mittels einer Kanüle 40 die Abdeckfolie 12 in der Nähe der Entlüftungsöffnung 20 durchstochen wie dies Fig. 3 zeigt.

Die Kanüle 40 ist mit einem gegenüber ihrer Spitze etwas zurückversetzten Anschlagkragen 41 versehen und wird vorzugsweise so weit eingestochen, bis dieser Anschlagkragen 41 an der Aussenseite der Abdeckfolie 12 anliegt. Der Anschlagkragen 41, der einen Durchmesser von 10 - 20 mm, insbesondere von 14 mm, haben kann, verhindert ein zu tiefes Eindringen der Kanüle 40 in den Behälter 10. Ihre Spitze steht nur so weit, insbesondere nur etwa 5 - 15 mm, vorzugsweise 7 mm, über den Anschlagkragen 41 vor, dass sie mit den Lebensmitteln 30 möglichst nicht in Berührung kommt. Die Spitze ist unter Ausbildung von drei, um 120° gegeneinander versetzten und um ca. 22° gegenüber der Axialrichtung geneigten Schneidkanten beschliffen.

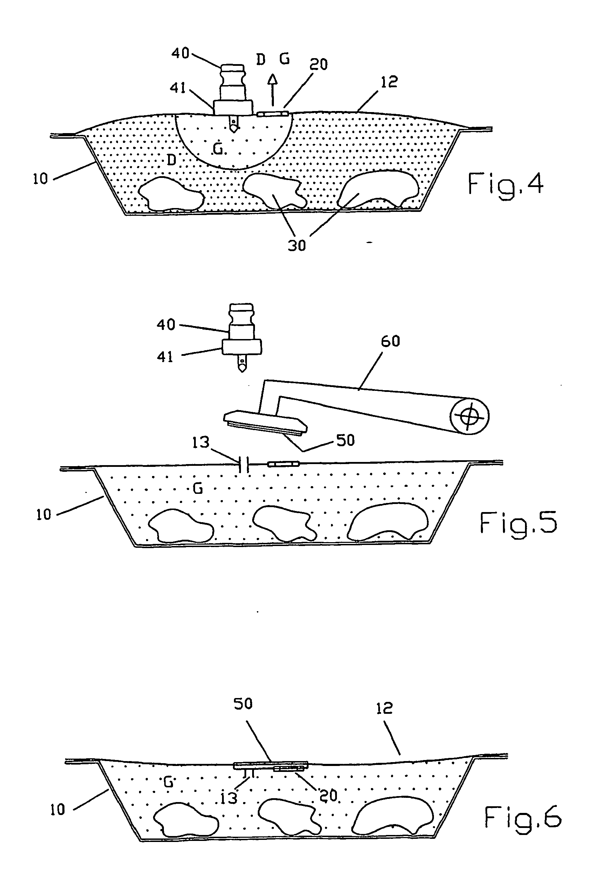

Wie dies Fig. 4 zeigt, wird sodann über die Kanüle 40 ein Gas G mit einem Überdruck von ca. 0.3 bar in den Behälter 10 injiziert. Die erforderliche Gaszuleitung zu der Kanüle 40 ist in Fig. 4 wie auch den übrigen Figuren nicht dargestellt. Das Gas G tritt an mehreren, über den Umfang verteilten Öffnungen zwischen der Spitze und dem Anschlagkragen 41 der Kanüle 40 radial aus. Durch den erneuten Überdruck dehnt sich die Abdeckfolie 12 wieder etwas aus und wölbt sich nach oben auf. Hierbei drückt sie gegen den Anschlagkragen 41 der Kanüle 40, wodurch das in Fig. 5 mit 13 bezeichnete Einstichloch gegen Ausreissen zusätzlich stabilisiert wird und auch eine gewisse Abdichtung erfährt. Damit die Abdeckfolie 12 durch die Kanüle 40 und ihren Anschlagkragen 41 nicht zu stark eingedrückt wird, wird sie während der Gasinjektion, wie in Fig. 4 auch dargestellt, wieder etwas, z.B. um 1 - 3 cm, zurückgezogen.

Der Behälter 10 wird unter Austreiben von Dampf D sowie noch vorhandener Luft durch die Entlüftungsöffnung 20 mit dem Gas G gespült und zwar solange, dass sich nach dem nachstehend noch beschriebenen Verschliessen des Behälters durch weitere Dampfkondensation in dem Behälter kein wesentlicher Unterdruck ausbilden kann, bzw. solange, bis der Gehalt an allfällig in dem Behälter enthaltenem Sauerstoff auf etwa 0.1% abgesunken ist. Das injizierte Gas muss dazu natürlich selbst möglichst sauerstofffrei sein.

Fig. 5 zeigt den Behälter 10 nach der Injektion des Gases G, wobei die Kanüle 40 aus dem Behälter 10 bereits wieder vollständig herausgezogen ist. Jetzt muss der Behälter 10 noch verschlossen werden.

Zum Verschliessen des Behälters 10 werden das Einstichloch 13 sowie die Entlüftungsöffnung 20 in der Abdeckfolie 12 durch Aufbringen eines Aufklebers 50 abgedichtet. Zum Aufbringen des Aufklebers 50 dient ein Stempel 60, welcher den Aufkleber 50 z.B. von einem Etitkettenspender (nicht dargestellt) übernimmt und ihn z.B. durch Ansaugen bis zum Aufbringen auf dem Behälter 10 festhält.

Zwischen dem Ende der Gasinjektion und dem Zurückziehen der Kanüle 40 einerseits und dem Aufbringen des Aufklebers 50 andererseits wird eine gewisse Zeitspanne zwischen etwa 0.5 und 10 sec zugewartet. In dieser Zeitspanne kann sich der durch die Injektion des Gases G in dem Behälter 10 erzeugte Überdruck durch die Entlüftungsöffnung sowie durch das durch die Kanüle 40 in der Abdeckfolie 12 verursachte Einstichloch 13 zumindest teilweise wieder abbauen, wobei die Folie in ihre flache Form zurückkehrt. Ausserdem kann sich der Sauerstoffgehalt in dem Behälter durch ein gewisses Rückströmen oder -diffundieren von Aussenluft auf günstige 4 - 5 % erhöhen. Schliesslich kann die Temperatur etwas weiter absinken, was für die Haltbarkeit des Aufklebers auf der Folie günstig ist.

Fig. 6 zeigt den Behälter 10 mit den erfindungsgemäss haltbar gemachten Lebensmitteln 30 in der Gasatmosphäre G und mit dem aufgeklebten Aufkleber 50 unter Umgebungsdruck. Die Abdeckfolie 12 ist unter dem Einfluss einer gewissen Nachkondensation von restlichem Dampf nach dem Aufbringen des Aufklebers leicht eingezogen, was die im Behälter enthaltenen Lebensmittel jedoch nicht beeinträchtigt und dazu beträgt, dass sie schön straff gespannt ist und dies längerfristig auch bleibt. In dieser Form ist der Behälter als Transport- und Verkaufspackung geeignet und wird im weiteren bevorzugt einer üblichen Kühlkette mit Kühltemperaturen im Bereich zwischen 1 - 8 °C zugeführt.

Für eine ausreichende Haltbarkeit der Lebensmittel 30 ist es wichtig, dass in ihrer Kemzone durch das Erhitzen eine Temperatur von 90 - 98 °C während 30 - 90 sec erreicht wird. Als Kriterium dafür kann der Behälter 10 vor dem Erhitzen und nach dem Verschliessen gewogen und daraus der durch den Dampfaustritt verursachte Gewichtsverlust ermittelt werden. Ist dieser zu gering, spricht dies dafür, dass eine ausreichende Temperatur nicht oder nur zu kurz erreicht wurde. Der entsprechende Behälter 10 kann dann aussortiert werden.

Vor dem Verzehr der anhand dem beschriebenen Verfahren haltbargemachten Lebensmittel werden diese in der Verpackung typischerweise in einem Mikrowellenofen auf Verzehrtemperatur erhitzt. Um ein Erhitzen in konventionellen Öfen bei höheren Temperaturen zu ermöglichen, kann der schalenförmige Behälter 10 und die Polyethylenterephthalat-Lage der Abdeckfolie 12 aus kristallinem Polyethylenterephthalat (C-PET) mit einem Schmelzpunkt über 230°C bestehen. Die zweite Lage der Kunststofffolie ist dabei eine Verbindungslage, welche aus einem Haftvermittler besteht. Die Abdeckfolie kann somit nach Aktivierung des Haftvermittlers auf den Rand des schalenförmigen Behälters geklebt werden.

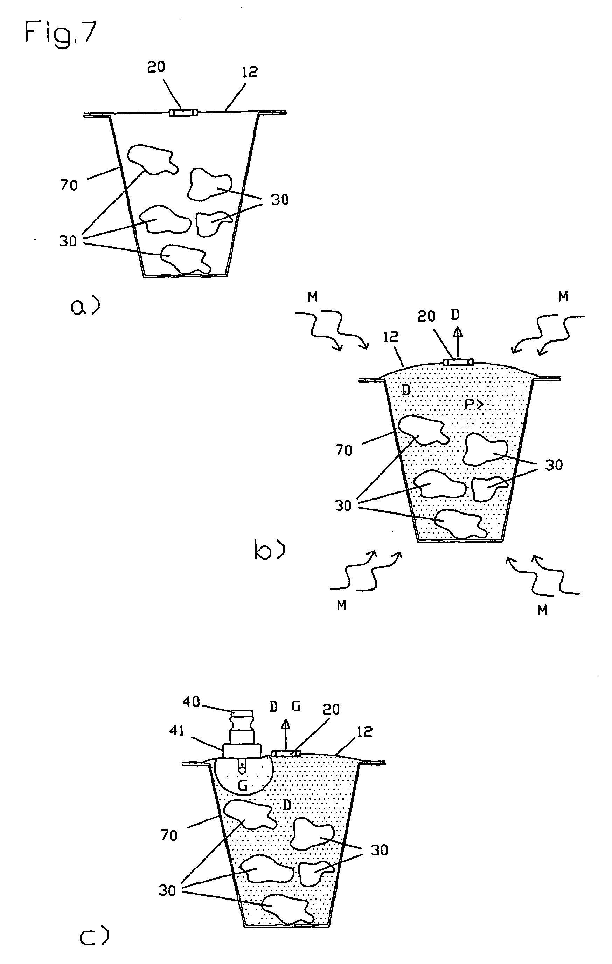

Es kann vorkommen, dass bei der Verwendung von z.B. becherförmigen Verpackungen die Gasspülung ungenügend ist und sich die Verpackung nach Verschliessen während der Abkühlung stark einzieht. Um dies zu vermeiden wird nach der Gasspülung eine Kühlschritt und eine zweite Gasinjektion durchgeführt, wie dies in Fig. 7a-g dargestellt ist.

Fig. 7a zeigt eine geeignete Becherverpackung 70 zur Verwendung im Rahmen des erfindungsgemässen Verfahrens mit zwei Injektionsschritten. In der Becherverpackung 70 sind in Luft Lebensmittel 30 vorhanden. Die Becherverpackung 70 mit einer Höhe von 80 bis 140 mm und einem Durchmesser von 60 bis 200 mm weist ebenfalls eine Abdeckfolie 12 und eine Entlüftungsöffnung 20 auf. Sie unterscheidet sich von dem voran beschriebenen Behälter 10 lediglich in deren Form.

Fig. 7b zeigt die Becherverpackung 70 von Fig. 7a während eines Erhitzens mittels Mikrowellen M zum Haltbarmachen der Lebensmittel 30, wie es bereits für den Behälter 10 von Fig. 2 beschrieben ist. Aus der in den Lebensmittel 30 enthaltenen Feuchtigkeit hat sich Dampf D gebildet und die Abdeckfolie 12 hat sich unter der Wirkung des entstandenen Überdrucks P> gedehnt und aufgewölbt. Ein Teil des Dampfes D zusammen mit der ursprünglich vorhandenen Luft in der Becherverpackung 70 entweicht durch die Entlüftungsöffnung 20.

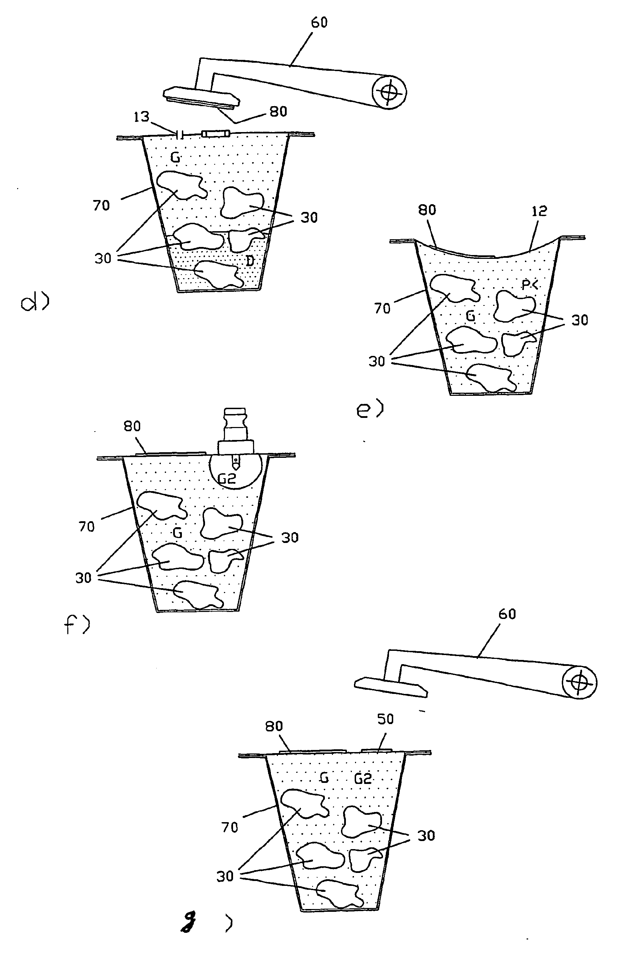

Fig. 7c zeigt die Becherverpackung 70 während einer ersten Injektion eines Gases G mit einer eingestochenen Kanüle 40 mit Anschlagkragen 41. Auch dieser Vorgang verläuft auf die Art und Weise, wie bereits für den Behälter 10 von Fig. 3 und Fig. 4 beschrieben. Auf Grund der Geometrie der Becherverpackung kann es vorkommen, dass die Becherverpackung 70 nicht genügend gespült wird und Dampf D im unteren Drittel der Becherverpackung 70 verbleibt, wie in Fig. 7d dargestellt.

Fig. 7d zeigt zudem das Verschliessen der Entlüftungsöffnung 20 und des durch die erste Injektion verursachten Einstichloches 13 mittels eines permanenten Aufklebers 80. Der permanente Aufkleber 80 wird in dieser Darstellung noch von dem Stempel 60 gehalten. Dieser permanente Aufkleber 80 weist einen Klebstoff auf, welcher sich auch unter Druck und erhöhter Temperatur nicht mehr löst.

Nach dem Aufspenden des permanenten Aufkleber 80 wird die Becherverpackung 70 in einem Kühlschritt von der Pasteurisierungstemperatur bis auf etwa 65 °C heruntergekühlt. Je nach Bedarf kann auch noch weiter, z.B. bis auf 2 - 4 °C, heruntergekühlt werden. Mit einsetzender Kühlung lässt der Druck in der Becherverpackung 70 nach und die Becherverpackung 70 zieht sich unter dem entstandenen Unterdruck P< zusammen. Die Abdeckfolie 12 wird dabei eingewölbt. Fig. 7e zeigt die während eines Kühlschrittes eingezogene Becherverpackung 70.

Fig. 7f zeigt die Becherverpackung 70 während einer zweiten Injektion eines Gases G mit einer eingestochenen Kanüle 40 mit Anschlagkragen 41. Die zweite Injektion wird an einer gegenüber der ersten Injektion versetzten Stellen vorgenommen. Während der zweiten Injektion wird gerade soviel Gas G2 injiziert, dass sich die zusammengezogene Becherverpackung 70 wieder bis auf die ursprüngliche Form aufbläht. Bei der zweiten Injektion reicht es, einen niedrigeren Überdruck als bei der ersten Injektion anzuwenden. Der Überdruck bei der zweiten Injektion kann etwa 0.2 bar betragen.

Fig. 7g zeigt die mit einem Aufkleber 50 verschlossene Becherverpackung 70 mit den gemäss der Erfindung haltbar gemachten Lebensmitteln 30. Das Aufbringen des Aufkleber 50 auf der Becherverpackung 70 verläuft auf die Art und Weise wie es bereits für den Behälter 10 weiter oben beschrieben wurde.

Die vorbeschriebene Ausbildung der Kanüle insbesondere hinsichtlich ihres Anschlagkragens und/oder ihre Bewegung könnte alternativ zu der vorbeschriebenen Ausbildung der Kunststofffolie und unabhängig von dieser als ein eigenständiges erfinderisches Konzept zur Verbesserung des aus WO 2006/084402 A1 bekannten Verfahrens angesehen werden. Gleiches gilt zumindest auch noch für die Wartezeit zwischen dem Ende der Gasinjektion und dem Verschliessen des Behälters und/oder für das Verfahren mit einem zwischengeschalteten Kühlschritt und einer zweiten Gasinjektion.

### BEZEICHNUNGSLISTE

- 10: Behälter
- 11: Rand des Behälters
- 12: Abdeckfolie
- 13: Einstichloch
- 20: Entlüftungsöffnung
- 30: Lebensmittel
- 40: Kanüle
- 41: Anschlagkragen
- 50: Aufkleber
- 60: Stempel
- 70: Becherverpackung
- 80: permanenter Aufkleber
- D: Dampf
- G: Gas
- G2: Gas
- P>: Überdruck
- P<: Unterdruck
- M: Mikrowellen

## Patentansprüche

1. Verfahren zum Haltbarmachen von Lebensmitteln (30), bei welchem die Lebensmittel (30) im feuchten Zustand in einem als Transport- und Verkaufsverpackung geeigneten Behälter (10) mit Entlüftungsöffnung (20) während einer begrenzten Zeit, zumindest jedoch solange mit Mikrowellen (M) erhitzt werden, bis sich heisser Dampf (D) in dem Behälter (10) bildet und durch die Entlüftungsöffnung (20) austritt, bei welchem nach dem Erhitzens ein Gas (G) mit einer Kanüle (40) in den Behälter (10) injiziert und dazu mit der Kanüle (40) eine Behälterwand aus einer Kunststofffolie (12) durchstochen wird und bei welchem nach der Gasinjektion die Entlüftungsöffnung (20) und das durch die Kanüle (40) in der Kunststofffolie (12) verursachte Einstichloch (13) verschlossen werden, **dadurch gekennzeichnet, dass** als Kunststofffolie (12) eine solche mit einer Dicke kleiner 100 µm verwendet wird, wobei wenigstens eine Lage der Kunststofffolie (12) aus Polyethylenterephthalat mit einer Dicke grösser 19 µm besteht.

2. Verfahren nach Anspruch 1, **dadurch gekennzeichnet, dass** als Kunststofffolie (12) eine solche verwendet wird, bei der die Lage aus Polyethylenterephthalat biaxial orientiert ist.

3. Verfahren nach einem der Ansprüche 1 oder 2, **dadurch gekennzeichnet, dass** als Kunststofffolie (12) eine solche verwendet wird, bei der die Lage aus Polyethylenterephthalat eine Dicke von 23 µm aufweist.

4. Verfahren nach einem der Ansprüche 1 - 3, **dadurch gekennzeichnet, dass** als Behälter eine Schale oder ein Becher mit der Kunststofffolie (12) als Abdeckfolie verwendet wird, wobei die Kunststofffolie (12) mehrlagig ist und eine zweite Lage eine Verbindungslage ist, welche eine Verbindung zwischen der Kunststofffolie und der Schale oder dem Becher erlaubt.

5. Verfahren nach einem der Ansprüche 1 bis 4, **dadurch gekennzeichnet, dass** die Verbindungslage aus Polypropylen besteht, und wobei die Lage aus Polypropylen vorzugsweise nur 2 bis 2.5 -fach dicker als die Lage aus Polyethylenterephthalat ist.

6. Verfahren nach einem Anspruch 5, **dadurch gekennzeichnet, dass** als Kunststofffolie (12) eine solche verwendet wird, bei der die Lage aus Polypropylen eine Dicke zwischen 40 und 65 µm, vorzugsweise von 50 µm, aufweist.

7. Verfahren nach einem der Ansprüche 5 oder 6, **dadurch gekennzeichnet, dass** als Kunststofffolie (12) eine solche verwendet wird, bei der zwischen den beiden Lagen eine Barriereschicht vorhanden ist.

8. Verfahren nach Anspruch 7, **dadurch gekennzeichnet**, das für die Barriereschicht Siliziumoxid, Aluminiumoxid und/oder Ethylenvinylalkohol verwendet wird.

9. Verfahren nach Anspruch 4, **dadurch gekennzeichnet, dass** für die Schale oder den Becher und die wenigstens eine Lage der Kunststofffolie (12) aus Polyethylenterephthalat ein kristallines Polyethylenterephthalat und für die Verbindungslage der Kunststofffolie ein Haftvermittler verwendet wird.

10. Verfahren nach einem der Ansprüche 1 - 9, **dadurch gekennzeichnet, dass** das Gas (G) unter einem Überdruck von 0.05 - 0.8 bar, vorzugsweise von 0.2 - 0.4 bar, weiter vorzugsweise von 0.3 bar, injiziert wird.

11. Verfahren nach einem der Ansprüche 1 - 10, **dadurch gekennzeichnet, dass** als Gas (G) ein sauerstofffreies Gas verwendet wird und dass der Behälter (10) mit diesem Gas (G) unter Austreiben von Sauerstoff durch die Entlüftungsöffnung gespült wird, bis der Sauerstoffgehalt im Behälter kleiner als 0.2 %, vorzugsweise 0.1 %, ist.

12. Verfahren nach einem der Ansprüche 1 - 10, **dadurch gekennzeichnet, dass** als Gas (G) Argon verwendet wird.

13. Verfahren nach einem der Ansprüche 1 - 12, **dadurch gekennzeichnet, dass** zur Injektion des Gases (G) eine Kanüle (40) mit einem gegenüber ihrer Spitze etwas zurückversetzten Anschlagkragen (41) verwendet und die Kanüle (40) so geführt wird, dass der Anschlagkragen (41) beim Injizieren des Gases (G) wenigstens zeitweise an der Aussenseite der Kunststofffolie (12) anliegt.

14. Verfahren nach einem der Ansprüche 1 - 13, **dadurch gekennzeichnet, dass** das Gas (G) mit der Kanüle (40) so injiziert wird, dass die Kanüle (40) mit den Lebensmitteln (30) nicht in Berührung kommt.

15. Verfahren nach einem der Ansprüche 1 - 14, **dadurch gekennzeichnet, dass** die Entlüftungsöffnung (20) und das durch die Kanüle (40) in der Kunststofffolie (12) verursachte Einstichloch (13) nicht vor Ablauf einer Wartezeit zwischen 0.5 und 10 sec nach der Injektion des Gases (G) abgedichtet werden.

16. Verfahren nach den Ansprüchen 1 - 15, **dadurch gekennzeichnet, dass** die Entlüftungsöffnung (20) und das durch die Kanüle (40) in der Kunststofffolie (12) verursachte Einstichloch (13) nach der Injektion des Gases (G) erst abgedichtet werden, wenn der Sauerstoffgehalt im Behälter auf 4 - 5% angestiegen ist.

17. Verfahren nach einem der Ansprüche 1 - 16, **dadurch gekennzeichnet, dass** die Entlüftungsöffnung (20) ebenfalls in der Kunststofffolie (12) angeordnet ist und gemeinsam mit dem durch die Kanüle (40) in der Kunststofffolie (12) verursachten Einstichloch (13) durch Aufbringen eines Aufklebers (50) abgedichtet wird.

18. Verfahren nach einem der Ansprüche 1 - 17, **dadurch gekennzeichnet, dass** beim Erhitzen eine Temperatur von 90 - 98 °C in der Kemzone der Lebensmittel (30) während 30 - 90 sec erzeugt wird.

19. Verfahren nach einem der Ansprüche 1 - 18, **dadurch gekennzeichnet, dass** die Entlüftungsöffnung (20) in der Kunststofffolie (12) durch Heissnadelperforation oder durch Flammperforation, vorzugsweise jedoch durch Laserperforation angebracht wird.

20. Verfahren nach einem der Ansprüche 1 - 19, **dadurch gekennzeichnet, dass** als Behälter (10) ein schalenförmiger Behälter aus Kunststoff verwendet wird, auf welchen die Kunststofffolie (12) als Abdeckfolie aufgeschweisst wird.

21. Verfahren nach einem der Ansprüche 1 - 21, **dadurch gekennzeichnet, dass** der durch den aus dem Behälter (10) austretenden Dampf verursachte Gewichtsverlust bestimmt und mit einem vorgegebenen Grenzwert verglichen wird, wobei eine ausreichende Haltbarkeit der Lebensmittel nur bei Überschreitung des Grenzwertes angenommen wird.

22. Verfahren nach einem der Ansprüche 1 - 21, **dadurch gekennzeichnet, dass** nach dem Verschliessen der Entlüftungsöffnung und des Einstichlochs der Gasinjektion ein zweites Mal Gas (G2) injiziert wird, dass zwischen der ersten und der zweiten Gasinjektion ein Kühlschritt vorgesehen ist, und dass auch das Einstichloch der zweiten Gasinjektion verschlossen wird.

23. Verfahren nach Anspruch 22, **dadurch gekennzeichnet, dass** die Entlüftungsöffnung und das Einstichloch der ersten Gasinjektion mit einem permanenten Aufkleber (80) verschlossen wird und dass das Einstichloch der zweiten Gasinjektion mit einem Aufkleber (50) verschlossen wird, welcher sich unter erhöhter Temperatur und/oder erhöhtem Druck löst.

24. Verfahren nach einem der Ansprüche 1 - 23, **dadurch gekennzeichnet, dass** während der ersten Gasinjektion der Behälter von aussen aktiv gekühlt wird.

## Claims

1. Method for preserving food (30), in which method the food (30), arranged in a container (10) that is suitable as transport and retail packaging and has a venting opening (20), is heated in the moist state by means of microwaves (M) for a limited time, but at least until hot steam (D) forms in the container (10) and exits through the venting opening (20), and in which method, after the heating, a gas (G) is injected into the container (10) using a needle (40), for which purpose a container wall made of a plastic film (12) is pierced by the needle (40), and, after the gas injection, the venting opening (20) and the pierced hole (13) formed in the plastic film (12) by the needle (40) are closed, **characterized in that** the plastic film (12) used has a thickness of less than 100 µm, at least one layer of the plastic film (12) being made of polyethylene terephthalate with a thickness greater than 19 µm.

2. Method according to Claim 1, **characterized in that** the plastic film (12) used is one in which the layer of polyethylene terephthalate is biaxially oriented.

3. Method according to either of Claims 1 and 2, **characterized in that** the plastic film (12) used is one in which the layer of polyethylene terephthalate has a thickness of 23 µm.

4. Method according to one of Claims 1 - 3, **characterized in that** the container used is a tray or a beaker with the plastic film (1 2) as cover film, the plastic film (12) being multi-layered, and a second layer being a connection layer that permits a connection between the plastic film and the tray or beaker.

5. Method according to one of Claims 1 to 4, **characterized in that** the connection layer is made of polypropylene, and the layer of polypropylene is preferably only 2 to 2.5 times thicker than the layer of polyethylene terephthalate.

6. Method according to Claim 5, **characterized in that** the plastic film (12) used is one in which the layer of polypropylene has a thickness of between 40 and 65 µm, preferably of 50 µm.

7. Method according to either of Claims 5 and 6, **characterized in that** the plastic film (12) used is one in which a barrier layer is provided between the two layers.

8. Method according to Claim 7, **characterized in that** silicon oxide, aluminium oxide and/or ethylene vinyl alcohol is used for the barrier layer.

9. Method according to Claim 4, **characterized in that** a crystalline polyethylene terephthalate is used for the tray or beaker and the at least one layer of the plastic film (12) made of polyethylene terephthalate, and an adhesion promoter is used for the connection layer of the plastic film.

10. Method according to one of Claims 1 - 9, **characterized in that** the gas (G) is injected at an overpressure of 0.05 - 0.8 bar, preferably of 0.2 - 0.4 bar, more preferably of 0.3 bar.

11. Method according to one of Claims 1 - 10, **characterized in that** the gas (G) used is an oxygen-free gas, and **in that** the container (10) is flushed with this gas (G) while oxygen is expelled through the venting opening, until the oxygen content in the container is less than 0.2%, preferably 0.1 %.

12. Method according to one of Claims 1 - 10, **characterized in that** the gas (G) used is argon.

13. Method according to one of Claims 1 - 12, **characterized in that** the gas (G) is injected using a needle (40) that has an abutment collar (41) set back slightly relative to the tip of the needle, and the needle (40) is guided such that the abutment collar (41) rests at least temporarily on the outer face of the plastic film (12) during the injection of the gas (G).

14. Method according to one of Claims 1 - 13, **characterized in that** the gas (G) is injected by the needle (40) in such a way that the needle (40) does not come into contact with the food (30).

15. Method according to one of Claims 1 - 14, **characterized in that** the venting opening (20) and the pierced hole (13) formed in the plastic film (12) by the needle (40) are not sealed until a waiting time of between 0.5 and 10 seconds has elapsed after the injection of the gas (G).

16. Method according to one of Claims 1 - 15, **characterized in that** the venting opening (20) and the pierced hole (13) formed in the plastic film (12) by the needle (40) are sealed, after the injection of the gas (G), only when the oxygen content in the container has risen to 4 - 5%.

17. Method according to one of Claims 1 - 16, **characterized in that** the venting opening (20) is likewise arranged in the plastic film (12) and is sealed, by application of an adhesive label (50), together with the pierced hole (13) formed in the plastic film (12) by the needle (40).

18. Method according to one of Claims 1 - 17, **characterized in that**, during the heating, a temperature of 90 - 98°C is generated in the core of the food (30) for 30 - 90 seconds.

19. Method according to one of Claims 1 - 18, **characterized in that** the venting opening (20) in the plastic film (12) is formed by hot-needle perforation or by flame perforation, but preferably by laser perforation.

20. Method according to one of Claims 1 - 19, **characterized in that** the container (10) used is a tray-shaped container, which is made of plastic and onto which the plastic film (12) is welded as cover film.

21. Method according to one of Claims 1 - 21, **characterized in that** the weight loss caused by the removal of steam from the container (10) is determined and compared with a predefined threshold value, and the food is assumed to be sufficiently preserved only when the threshold value is exceeded.

22. Method according to one of Claims 1 - 21, **characterized in that**, after the venting opening and the pierced hole of the gas injection have been closed, gas (G2) is injected a second time, **in that** a cooling step is provided between the first gas injection and second gas injection, and **in that** the pierced hole of the second gas injection is also closed.

23. Method according to Claim 22, **characterized in that** the venting opening and the pierced hole of the first gas injection are closed with a permanent adhesive label (80), and **in that** the pierced hole of the second gas injection is closed with an adhesive label (50) that detaches at increased temperature and/or increased pressure.

24. Method according to one of Claims 1 - 23, **characterized in that**, during the first gas injection, the container is actively cooled from outside.

## Revendications

1. Procédé de conservation de produits alimentaires (30), dans lequel les produits alimentaires (30) sont chauffés à l'état humide à l'aide de microondes (M) dans un récipient (10) qui convient comme emballage de transport et de commercialisation, et ce pendant une durée limitée mais au moins jusqu'à ce que de la vapeur chaude (D) se forme dans le récipient (10) et sorte par l'ouverture d'évent (20), et dans lequel après le chauffage, un gaz (G) est injecté dans le récipient (10) à l'aide d'une canule (40) et dans ce but, une paroi du récipient, constituée d'une feuille (12) en matière plastique, est percée par la canule (40), l'ouverture d'évent (20) et la perforation (13) provoquée dans la feuille (12) en matière plastique par la canule (40) étant fermées après l'injection de gaz,
**caractérisé en ce que**
le procédé utilise comme feuille (12) en matière plastique une feuille dont l'épaisseur est inférieure à 100 µm, au moins une couche de la feuille (12) en matière plastique étant constituée de poly(téréphtalate d'éthylène) d'une épaisseur supérieure à 19 µm.

2. Procédé selon la revendication 1, **caractérisé en ce qu'**il utilise comme feuille (12) en matière plastique une feuille dont la couche de poly(téréphtalate d'éthylène) a été orientée biaxialement.

3. Procédé selon l'une des revendications 1 ou 2, **caractérisé en ce qu'**il utilise comme feuille (12) en matière plastique une feuille dans laquelle la couche de poly(téréphtalate d'éthylène) présente une épaisseur de 23 µm.

4. Procédé selon l'une des revendications 1 à 3, **caractérisé en ce qu'**il utilise comme récipient une barquette ou un gobelet dotés d'une feuille de recouvrement constituée de la feuille (12) en matière plastique, la feuille (12) en matière plastique étant multicouche et une deuxième couche étant une couche de liaison qui permet une liaison entre la feuille en matière plastique et la barquette ou le gobelet.

5. Procédé selon l'une des revendications 1 à 4, **caractérisé en ce que** la couche de liaison est constitué de polypropylène, la couche de polypropylène dont l'épaisseur n'est de préférence que de 2 à 2,5 fois plus épaisse que la couche de poly(téréphtalate d'éthylène).

6. Procédé selon la revendication 5, **caractérisé en ce qu'**il utilise comme feuille (12) en matière plastique une feuille dont la couche de polypropylène présente une épaisseur comprise entre 40 et 65 µm et de préférence de 50 µm.

7. Procédé selon l'une des revendications 5 ou 6, **caractérisé en ce qu'**il utilise comme feuille (12) en matière plastique une feuille qui présente une couche de barrière entre les deux couches.

8. Procédé selon la revendication 7, **caractérisé en ce qu'**il utilise pour la couche de barrière de l'oxyde de silicium, de l'oxyde d'aluminium et/ou un alcool éthylène-vinylique.

9. Procédé selon la revendication 4, **caractérisé en ce qu'**il utilise pour la barquette ou le gobelet et pour au moins une couche de la feuille (12) en matière plastique de poly(téréphtalate d'éthylène) un poly(téréphtalate d'éthylène) cristallin et pour la couche de liaison de la feuille de matière plastique un agent de renforcement de l'adhérence.

10. Procédé selon l'une des revendications 1 à 9, **caractérisé en ce que** le gaz (G) est injecté sous une surpression de 0,05 à 0,8 bar, de préférence de 0,2 à 0,4 bar et de façon encore plus préférable de 0,3 bar.

11. Procédé selon l'une des revendications 1 à 10, **caractérisé en ce qu'**il utilise comme gaz (G) un gaz exempt d'oxygène et **en ce que** le récipient (10) est balayé par ce gaz (G) pour expulser l'oxygène par l'ouverture d'évent jusqu'à ce que la teneur en oxygène présent dans le récipient soit inférieure à 0,2 % et de préférence à 0,1 %.

12. Procédé selon l'une des revendications 1 à 10, **caractérisé en ce qu'**il utilise comme gaz (G) l'argon.

13. Procédé selon l'une des revendications 1 à 12, **caractérisé en ce que** pour injecter le gaz (G), il utilise une canule (40) présentant un collet de butée (41) légèrement en recul par rapport à sa pointe et **en ce que** la canule (40) est insérée de telle sorte que lors de l'injection du gaz (G), le collet de butée (41) repose au moins une partie du temps contre le côté extérieur de la feuille (12) en matière plastique.

14. Procédé selon l'une des revendications 1 à 13, **caractérisé en ce que** le gaz (G) est injecté à l'aide de la canule (40) de telle sorte que la canule (40) n'entre pas en contact avec les produits alimentaires (30).

15. Procédé selon l'une des revendications 1 à 14, **caractérisé en ce que** l'ouverture d'évent (20) et la perforation (13) provoquée dans la feuille (12) en matière plastique par la canule (40) ne sont pas refermées de manière hermétique avant l'écoulement d'une durée d'attente comprise entre 0,5 et 10 s après l'injection du gaz (G).

16. Procédé selon l'une des revendications 1 à 15, **caractérisé en ce que** l'ouverture d'évent (20) et la perforation (13) provoquée dans la feuille (12) en matière plastique par la canule (40) ne sont refermées après l'injection de gaz (G) que si la teneur en oxygène dans le récipient est montée à 4-5 %.

17. Procédé selon l'une des revendications 1 à 16, **caractérisé en ce que** l'ouverture d'évent (20) est également disposée dans la feuille (12) en matière plastique et **en ce que** la perforation (13) provoquée par la canule (40) dans la feuille (12) en matière plastique est fermée conjointement par application d'un adhésif (50).

18. Procédé selon l'une des revendications 1 à 17, **caractérisé en ce que** lors du chauffage, on amène pendant 30 à 90 sec la température à 90-98°C dans la zone d'âme des produits alimentaires (30).

19. Procédé selon l'une des revendications 1 à 18, **caractérisé en ce que** l'ouverture d'évent (20) est formée dans la feuille (12) en matière plastique par perforation à l'aide d'une aiguille chauffée ou par perforation à la flamme, mais de préférence par perforation au laser.

20. Procédé selon l'une des revendications 1 à 19, **caractérisé en ce que** comme récipient (10), il utilise un récipient en matière plastique en forme de barquette, sur lequel la feuille (12) en matière plastique est soudée pour former la feuille de recouvrement.

21. Procédé selon l'une des revendications 1 à 21, **caractérisé en ce que** la perte de poids provoquée par la sortie de vapeur hors du récipient (10) est déterminée et est comparée à une valeur limite prédéterminée et **en ce que** les produits alimentaires ne sont considérés comme présentant une durée de conservation suffisante que si la valeur limite est dépassée.

22. Procédé selon l'une des revendications 1 à 21, **caractérisé en ce qu'**après la fermeture de l'ouverture d'évent et de la perforation prévue pour l'injection de gaz, un gaz (G2) est injecté une deuxième fois en prévoyant une étape de refroidissement entre la première et la deuxième injection de gaz, le trou de perforation de la deuxième injection de gaz étant également fermé.

23. Procédé selon la revendication 22, **caractérisé en ce que** l'ouverture d'évent et la perforation prévue pour la première injection de gaz sont fermées par un adhésif permanent (80) et **en ce que** la perforation prévue pour la deuxième injection de gaz est fermée par un adhésif (50) qui se décompose à haute température et/ou à haute pression.

24. Procédé selon l'une des revendications 1 à 23, **caractérisé en ce que** le récipient est refroidi activement de l'extérieur pendant la première injection de gaz.
